# EUROPEAN PATENT APPLICATION

(11) **EP 3 852 292 A1**
(43) Date of publication of application: **21.07.2021**
(21) Application number: 18933116.8
(22) Date of filing: 13.09.2018
(51) Int. Cl.: H04L 1/18

(54) **METHOD FOR DETERMINING HARQ-ACK CODEBOOK, TERMINAL DEVICE AND NETWORK DEVICE**

(71) Applicant: GUANGDONG OPPO MOBILE TELECOMMUNICATIONS CORP., LTD., Dongguan Guangdong 523860 (CN)
(72) Inventor: LIN, Yanan, Dongguan, Guangdong 523860 (CN)
(74) Representative: Novagraaf Technologies
(86) International application number: PCT/CN2018/105495
(87) International publication number: WO 2020/051835

(57) **Abstract**

Embodiments of the present application provide a method for determining an HARQ-ACK codebook, a terminal device and a network device, and can make the terminal device and the network device have the same cognition of codebook determination. The method comprises: the terminal device receives a first PDSCH sent by the network device, wherein the first PDSCH is a PDSCH within a first time window, and the first PDSCH corresponds to first HARQ-ACK information; the terminal device determines an HARQ-ACK codebook corresponding to the first time window, and the HARQ-ACK codebook comprises the first HARQ-ACK information.

## Description

### TECHNICAL FIELD

The embodiments of the present application relate to the field of communications, and more specifically, to a method for determining a HARQ-ACK codebook, a terminal device and a network device.

### BACKGROUND

When a New Radio (NR) system is applied to an unlicensed frequency band, standalone network deployment can be supported, that is, it does not rely on carriers on the licensed frequency band to provide auxiliary services. In this scenario, after the terminal device receives a Physical Downlink Shared Channel (PDSCH) on an unlicensed carrier, it needs to send a Hybrid Automatic Repeat request Acknowledgement (HARQ-ACK) information corresponding to the PDSCH on the unlicensed carrier, and how to determine a HARQ-ACK codebook corresponding to the PDSCH is a problem worth studying.

### SUMMARY

The embodiments of the application provide a method for determining a HARQ-ACK codebook, a terminal device and a network device. When the terminal device performs feedback by using a dynamic codebook, if a position of a PDSCH corresponding to a Physical Downlink Control Channel (PDCCH) monitoring opportunity indication in a HARQ-ACK feedback window is inconsistent with a counter Downlink Assignment Indication (DAI) corresponding to the PDSCH, a starting point for codebook determination is based on the PDSCH position, or the starting point for the codebook determination is based on the Counter DAI, so that the terminal device and the network device can maintain the same cognition of the codebook determination.

In the first aspect, a method for determining a HARQ-ACK codebook is provided, and the method includes:
receiving, by a terminal device, a first PDSCH sent by a network device, where the first PDSCH is a PDSCH in a first time window and corresponds to first HARQ-ACK information; and
determining, by the terminal device, a HARQ-ACK codebook corresponding to the first time window, where the HARQ-ACK codebook includes the first HARQ-ACK information.

It should be noted that the first time window is a HARQ-ACK feedback window, and the terminal device uses a dynamic codebook for feedback.

In a second aspect, a method for determining a HARQ-ACK codebook is provided, and the method includes:
sending, by a network device, a first PDSCH to a terminal device within a first time window, where the first PDSCH corresponds to first HARQ-ACK information; and
determining, by the network device, a HARQ-ACK codebook corresponding to the first time window, where the HARQ-ACK codebook includes the first HARQ-ACK information.

According to a third aspect, there is provided a terminal device which is configured to perform the method in the above first aspect or the implementations thereof.

Specifically, the terminal device includes a functional module configured to perform the method in the above first aspect or the implementations thereof.

According to a fourth aspect, there is provided a network device configured to perform the method in the second aspect or the implementations thereof.

Specifically, the network device includes a functional module configured to perform the method in the above second aspect or the implementations thereof.

According to a fifth aspect, there is provided a terminal device including a processor and a memory. The memory is used for storing a computer program, and the processor is configured to call and run the computer program stored in the memory to perform the method in the above-mentioned first aspect or the implementations thereof.

According to a sixth aspect, there is provided a network device including a processor and a memory. The memory is used for storing a computer program, and the processor is configured to call and run the computer program stored in the memory to perform the method in the above-mentioned second aspect or the implementations thereof.

According to a seventh aspect, there is provided a chip which is used to carry out the method in any one of the above first to second aspects or the implementations thereof.

Specifically, the chip includes a processor configured to call and run a computer program from a memory, to cause a device installed with the chip to perform the method in any one of the above first to the second aspects or the implementations thereof.

According to an eighth aspect, there is provided a computer-readable storage medium for storing a computer program that causes a computer to perform the method in any one of the above first to second aspects or the implementations thereof.

According to a ninth aspect, there is provided a computer program product including computer program instructions that cause a computer to perform the method in any one of the above first to second aspects or the implementations thereof.

According to a tenth aspect, there is provided a computer program which, when running on a computer, causes the computer to perform the method in any one of the above first to second aspects or the implementations thereof.

With the above technical solutions, when the terminal device uses a dynamic codebook for feedback, if the position of the PDSCH corresponding to the PDCCH monitoring opportunity in the HARQ-ACK feedback window is inconsistent with the Counter DAI corresponding to the PDSCH, the starting point for the codebook determination is based on the PDSCH position, or the starting point for the codebook determination is based on the Counter DAI, so that the terminal device and the network device may have the same cognition of the codebook determination.

### BRIEF DESCRIPTION OF THE DRAWINGS

FIG. 1 is a schematic diagram of a communication system architecture according to an embodiment of the present application.
FIG. 2 is a schematic diagram of a HARQ-ACK feedback window in a single carrier scenario according to an embodiment of the present application.
FIG 3 is a schematic diagram of a HARQ-ACK feedback window in a multiple carrier scenario according to an embodiment of the present application.
FIG. 4 is a schematic diagram of a HARQ-ACK feedback window according to an embodiment of the present application.
FIG 5 is a schematic flowchart of a method for determining a HARQ-ACK codebook according to an embodiment of the present application.
FIG. 6 is a schematic diagram of another HARQ-ACK feedback window according to an embodiment of the present application.
FIG 7 is a schematic flowchart of another method for determining a HARQ-ACK codebook according to an embodiment of the present application.
FIG. 8 is a schematic block diagram of a terminal device according to an embodiment of the present application.
FIG 9 is a schematic block diagram of a network device according to an embodiment of the present application.
FIG 10 is a schematic block diagram of a communication device according to an embodiment of the present application.
FIG. 11 is a schematic block diagram of a chip according to an embodiment of the present application.
FIG. 12 is a schematic block diagram of a communication system according to an embodiment of the present application.

### DETAILED DESCRIPTION

The technical solutions in the embodiments of the present application will be described below in connection with the drawings in the embodiments of the present application. Obviously, the described embodiments are part of the embodiments of the present application, but not all the embodiments. All other embodiments obtained by those of ordinary skill in the art based on the embodiments in the present application without creative work fall within the protection scope of the present application.

The embodiments of the present application can be applied to various communication systems such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio, NR system, an evolution system of a NR system, a LTE-based access to unlicensed spectrum (LTE-U) system, a NR-based access to unlicensed spectrum (NR-U) system, a Universal Mobile Telecommunication System (UMTS), Wireless Local Area Networks (WLAN), a Wireless Fidelity (Wi-Fi), a next-generation communication system or other communication systems.

Generally speaking, traditional communication systems support a limited number of connections and are easy to implement. However, with the development of communication technologies, mobile communication systems will not only support traditional communications, but will also support, for example, Device to Device (D2D) communication, machine to machine (M2M) communication, machine type communication (MTC), vehicle to vehicle (V2V) communication, etc. The embodiments of the present application can also be applied to these communication systems.

Optionally, the communication system in the embodiments of the present application can be applied to a carrier aggregation (CA) scenario, a dual connectivity (DC) scenario, or a standalone (SA) deployment scenario.

The frequency spectrum applied in the embodiments of the present application is not limited. For example, the embodiments of this application can be applied to either licensed spectrum or unlicensed spectrum.

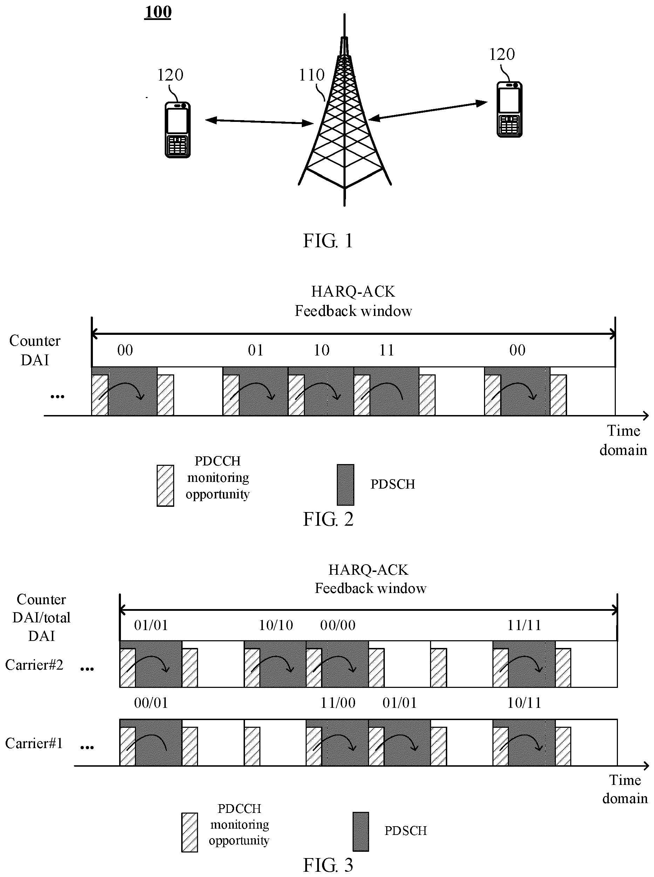

Exemplarily, a communication system to which the embodiments of the present disclosure are applied is as shown in FIG. 1. The communication system 100 may include a network device 110 which may be a device that communicates with a terminal device 120 (or referred to as a communication terminal or a terminal). The network device 110 can provide communication coverage for a specific geographic area, and can communicate with terminal devices located in the coverage area.

FIG. 1 exemplarily shows one network device and two terminal devices. Optionally, the communication system 100 may include multiple network devices and other numbers of terminal devices can be included in the coverage of each network device, which is not particularly limited in the embodiments of the present disclosure.

Optionally, the communication system 100 may also include other network entities such as a network controller and a mobility management entity, which are not limited in the embodiments of the present application.

It should be understood that the device with a communication function in the network and/or system of the embodiments of the present disclosure may be referred to as the communication device. Taking the communication system 100 shown in FIG. 1 as an example, the communication device may include a network device 110 and a terminal device 120 which have the communication function. The network device 110 and the terminal device 120 may be the specific devices as described above, which will not be repeated here. The communication device may also include other devices in the communication system 100, such as a network controller, a mobility management entity, and other network entities, which are not limited in the embodiments of the present disclosure.

Various embodiments are described in combination with the network device and the terminal device in the embodiments of the present application in which the terminal device may also be referred to as user equipment (UE), an access terminal, a user unit, a user station, a mobile station, a mobile site, a remote station, a remote terminal, a mobile device, a user terminal, a terminal, a wireless communication device, a user agent or a user device. The terminal device can be a station (ST) in a WLAN, which may be a cellular phone, a cordless phone, a Session Initiation Protocol (SIP) phone, a Wireless Local Loop (WLL) station, and a Personal Digital Assistant (PDA) device, a handheld device with a wireless communication function, a computing device or other processing devices connected to wireless modems, vehicle-mounted devices, wearable devices, and terminal devices next-generation communication systems, such as terminal devices in the NR network or terminal devices in the future evolution of the Public Land Mobile Network (PLMN) network.

As an example instead of a limitation, in the embodiments of the present application, the terminal device may also be a wearable device. The wearable device can also be referred to as a wearable smart device, which is a general term for wearable devices which are designed and developed by using wearable technology to intelligently design and develop everyday wear, such as glasses, gloves, watches, clothing and shoes. The wearable device is a portable device that is directly worn on the body or integrated into user's clothes or accessories. The wearable device is not only a hardware device, but also realizes powerful functions through software support, data interaction, and cloud interaction. In a broad sense, the wearable smart device includes full-featured and large-sized devices of which complete or partial functions can be achieved without relying on smart phones, such as smart watches or smart glasses, and devices which focus on only a certain type of application function and need to cooperate with other devices such as smart phones, such as various smart bracelets and smart jewelry for physical sign monitoring.

The network device can be a device used to communicate with a mobile device. The network device can be an access point (AP) in WLAN, a Base Transceiver Station (BTS) in GSM or CDMA, or a NodeB (NB) in WCDMA, and can also be an Evolutional Node B (eNB or eNodeB) in LTE, a relay station, an access point, a vehicle-mounted device, a wearable device, a network device (gNB) in a NR network, a network device in future evolutional PLMN network, or the like.

In the embodiments of the present application, the network device provides services for a cell, and the terminal device communicates with the network device through transmission resources (for example, frequency domain resources, or spectrum resources) used by the cell. The cell may be a cell corresponding to the network device (e.g., a cell corresponding to the base station), or belong to a macro base station or a base station corresponding to a small cell. The small cell herein can include a Metro cell, a Micro cell, a Pico cell, a Femto cell, etc., which are characterized in small coverage and low transmission power, and are suitable for providing high-rate data transmission services.

In the embodiments of the present application, the terminal device uses a dynamic codebook for HARQ-ACK feedback, and there can be specifically two cases:

Case 1: a single carrier scenario. When a network device sends a PDSCH to a terminal device, it will send counter DAI information to the terminal device at the same time. The counter DAI information is sent to the terminal device through a PDCCH and is used for the terminal device to determine the HARQ feedback codebook, that is, the counter DAI indicates a serial number of the PDSCH scheduled by the current PDCCH in the HARQ feedback window, where the PDSCHs are sequentially ordered according to the PDCCH monitoring opportunity. In order to reduce the number of bits of the counter DAI information, a modulo method can be used for the counter. For example, if the number of bits of the counter DAI is 2 bits, the value of the counter DAI mods 4; if the number of bits of the counter DAI is 3 bits, the value of the counter DAI mods 8. As shown in FIG. 2, there are a total of 8 slots in the HARQ-ACK feedback window, and each slot is configured with a PDCCH monitoring opportunity. The network device schedules the terminal device to receive the PDSCH at a first, third, fourth, fifth, and seventh PDCCH detection opportunities of the 8 PDCCH detection opportunities. Assuming that the number of bits of the counter DAI is 2 bits, correspondingly, the counter DAIs corresponding to the PDSCHs on these 5 slots are 00, 01, 10, 11 and 00, respectively.

For each PDSCH, a bit size K of the corresponding HARQ-ACK feedback can be configured by the higher layer. For example, if at least one PDSCH in the scheduled PDSCHs of the terminal device supports 2 codewords, the bits of the HARQ-ACK corresponding to all PDSCHs are 2 bits (K=2). For another example, in the case where code block group (CBG) feedback is supported, it is assumed that a maximum number of HARQ-ACK bits corresponding to a PDSCH is 8 bits, then the number of HARQ-ACK bits corresponding to each of all the PDSCHs is 8 bits (K=8).

In the example shown in FIG. 2, it is assumed that K=2, which corresponds to two codewords. When the terminal device receives those five PDSCHs, the terminal device can determine that the codebook size in the HARQ-ACK feedback window is 10 bits, as shown in Table 1 below:

**Table 1**

| Counter DAI "00" | | Counter DAI "01" | | Counter DAI "10" | | Counter DAI "11" | | Counter DAI "00" | |
|---|---|---|---|---|---|---|---|---|---|
| Codeword 0 | Codeword 1 | Codeword 0 | Codeword 1 | Codeword 0 | Codeword 1 | Codeword 0 | Codeword 1 | Codeword 0 | Codeword 1 |

When the terminal device receives only partial PDSCHs of the five PDSCHs, for example, the terminal device does not receive a PDSCH with a counter DAI of 01, in this case, after receiving a PDSCH with a counter DAI of 00, the terminal device receives a PDSCH with a counter DAI of 10, at this time, the terminal device can determine that it has lost the PDSCH with a counter DAI of 01 and thus will fill in the corresponding position with a negative acknowledgement (NACK), as shown in Table 2 below:

**Table 2**

| Counter DAI "00" | | *Counter DAI "01"* | | Counter DAI "10" | | Counter DAI "11" | | Counter DAI "00" | |
|---|---|---|---|---|---|---|---|---|---|
| Codeword 0 | Codeword 1 | *NACK* | *NACK* | Codeword 0 | Codeword 1 | Codeword 0 | Codeword 1 | Codeword 0 | Codeword 1 |

It should be understood that if there is only one codeword in the PDSCH, the HARQ-ACK feedback information corresponding to codeword 1 is NACK.

Case 2: a multi-carrier scenario. When a network device sends a PDSCH to a terminal device, it will simultaneously send two DAI messages, a counter DAI and a total DAI, to the terminal device. The two DAI messages are sent to the terminal device through the PDCCH and are used for the terminal device to determine the HARQ feedback codebook, where the counter DAI is used to indicate a serial number of the PDSCH scheduled by the current PDCCH in the HARQ feedback window, and the total DAI is used to inform the terminal device how many HARQ-ACKs there are in the HARQ feedback window so far. The PDSCHs are sequentially ordered according to the PDCCH detection opportunities, specifically, they may be ordered first in the frequency domain and then in the time domain. In order to reduce the number of bits in the counter DAI (or the total DAI) information, a modulo method can be used for the counter. For example, if the number of bits in the counter DAI (or the total DAI) is 2 bits, the value of the counter DAI (or the total DAI) mods 4; if the number of bits in the counter DAI (or the total DAI) is 3 bits, the value of the counter DAI (or the total DAI) mods 8.

As shown in FIG. 3, the terminal device is configured with 2 carriers, a total of 8 slots are included in the HARQ-ACK feedback window, and each slot of each carrier is configured with a PDCCH monitoring opportunity, then the order of the PDCCH detection opportunities is: a first slot of carrier #1, a first slot of carrier #2, a second slot of carrier #1, a second slot of carrier #2,..., an eighth slot of carrier #1, and an eighth slot of carrier #2. The network device schedules the terminal device to receive the PDSCH on the first, second, sixth, seventh, eighth, ninth, thirteenth, and fourteenth slots of the 16 PDCCH detection opportunities, assuming that the number of bits of the counter DAI and the total DAI bits is 2 bits, respectively, correspondingly, the counter DAI and total DAI corresponding to the PDSCHs on the 8 slots are shown in FIG. 3.

In the example shown in FIG. 3, it is assumed that K=2, which corresponds to two codewords. Assuming that the terminal device failed to receive the PDSCH in the fourth slot, the terminal device can determine the codebook in the HARQ-ACK feedback window as shown in Table 3 below:

**Table 3**

| "00/01" | | "01/01" | | "10/10" | | *"11*/*xx"* | | *"00*/*xx"* | |
|---|---|---|---|---|---|---|---|---|---|
| Codeword 0 | Codeword 1 | Codeword 0 | Codeword 1 | Codeword 0 | Codeword 1 | *NACK* | *NACK* | *NACK* | *NACK* |

| "01/01" | | "10/11" | | "11/11" | | | | | |
|---|---|---|---|---|---|---|---|---|---|
| Codeword 0 | Codeword 1 | Codeword 0 | Codeword 1 | Codeword 0 | Codeword 1 | | | | |

It should be understood that the PDSCH scheduled by the PDCCH may be in the same slot as the PDCCH, or may not be in the same slot as the PDCCH, which is not limited in the embodiments of the present application.

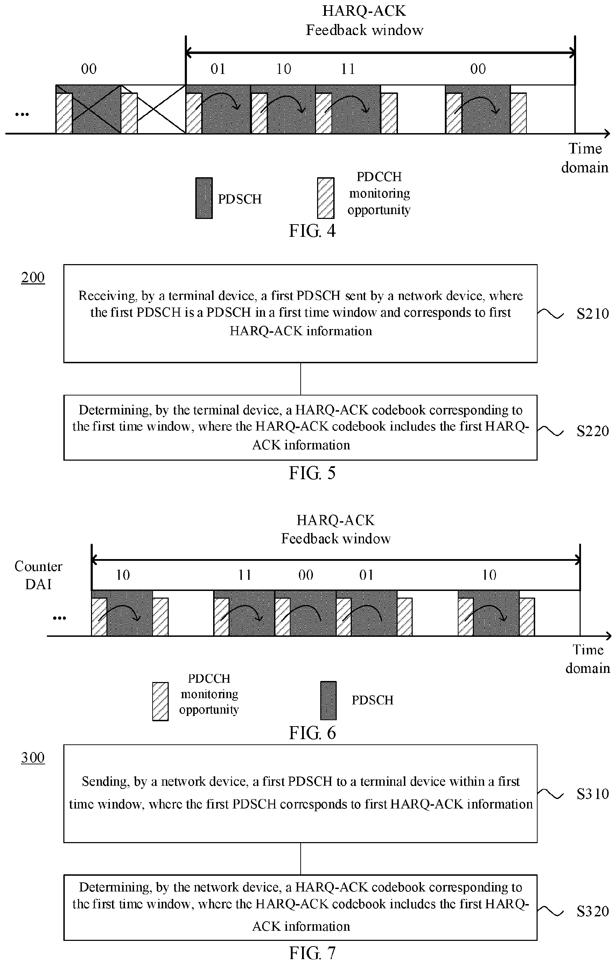

It should be understood that on the unlicensed frequency band, as shown in FIG. 4, the HARQ-ACK feedback window can be determined after the network device has preempted the channel, and is a dynamic feedback window. For example, a start position of the HARQ-ACK feedback window is a starting position of a COT. However, since the scheduled PDSCHs are prepared in advance, there may be a case where the counter DAI in the first PDCCH monitoring opportunity in the HARQ-ACK feedback window is not "00". In addition, the starting position of the HARQ-ACK feedback window may be indicated on subsequent time-frequency resources, and thus in subsequent indication, there may also be a case where the counter DAI information in the first PDCCH monitoring opportunity in the window is not "00". When such cases occur, it needs to make corresponding specifications so that the network device and the terminal device have the same cognition of the HARQ-ACK codebook.

FIG. 5 is a schematic flowchart of a method 200 for determining a HARQ-ACK codebook according to an embodiment of the present application. As shown in FIG. 5, the method 200 may include the following:

S210, receiving, by a terminal device, a first PDSCH sent by a network device, where the first PDSCH is a PDSCH in a first time window and corresponds to first HARQ-ACK information; and

S220, determining, by the terminal device, a HARQ-ACK codebook corresponding to the first time window, where the HARQ-ACK codebook includes the first HARQ-ACK information.

It should be understood that the first time window is a HARQ-ACK feedback window.

It should be noted that the HARQ-ACK codebook is a dynamic codebook. Specifically, it can be a dynamic codebook in a single-carrier scenario, or a dynamic codebook in a multi-carrier scenario.

Optionally, in some embodiments of the present application, the first PDSCH is a PDSCH corresponding to a Nth PDCCH monitoring opportunity indication within the first time window, a counter DAI corresponding to the first PDSCH is M, N and M are positive integers, and N<M.

In other words, in the first time window, the first PDSCH is a PDSCH corresponding to the Nth PDCCH monitoring opportunity indication, but the counter DAI corresponding to the first PDSCH is M, that is, there is an inconsistency.

Optionally, the terminal device determines a Nth group of HARQ-ACK information in the HARQ-ACK codebook as the first HARQ-ACK information, where each group of HARQ-ACK information includes a number of K HARQ-ACK bits, and K is a positive integer greater than or equal to 1.

Further, when N is a positive integer greater than or equal to 2, the terminal device determines that the first group to the (N-1)th group of HARQ-ACK information in the HARQ-ACK codebook are NACK information or placeholder information.

It should be noted that the placeholder information is not information with specific meanings such as NACK information, and the position corresponding to the placeholder information cannot normally store the codebook. For example, it can be understood as being left blank, that is, it is not used to store the codebook information. When the first to (N-1)th groups of HARQ-ACK information are the placeholder information, the first to (N-1)th groups in the HARQ-ACK codebook are left blank and no information is stored therein.

Optionally, the terminal device determines an Mth group of HARQ-ACK information in the HARQ-ACK codebook as the first HARQ-ACK information, where each group of HARQ-ACK information includes a number of K HARQ-ACK bits, and K is a positive integer greater than or equal to 1.

Further, when M is a positive integer greater than or equal to 2, the terminal device determines that the first group to the (M-1)th group of HARQ-ACK information in the HARQ-ACK codebook are NACK information or placeholder information.

Optionally, in some embodiments of the present application, the terminal device receives first indication information sent by the network device, and the first indication information is used to determine at least one of the following information:
a start position of the first time window, an end position of the first time window, a length of the first time window, a time domain position of resources for transmitting the HARQ-ACK codebook, a frequency domain position of the resources for transmitting the HARQ-ACK codebook, and a number of resources for transmitting the HARQ-ACK codebook.

Optionally, the terminal device determines the first time window according to the first indication information.

Optionally, the terminal device determines the time domain position of the resources for transmitting the HARQ-ACK codebook according to the first indication information.

Specifically, the terminal device determines the time domain position of the resources for transmitting the HARQ-ACK codebook according to HARQ-ACK feedback timing indication information and the first indication information, where the HARQ-ACK feedback timing indication information is HARQ-ACK feedback timing indication information corresponding to a first PDSCH or a last PDSCH in the first time window.

For example, the end position of a last symbol of the first PDSCH is on slot n, the HARQ-ACK feedback timing indication information is 5, and the time domain position of the resources for transmitting the HARQ-ACK codebook indicated by the first indication information is 2. Then the time domain position of the resources actually transmitting the HARQ-ACK codebook is on the slot n+7.

Optionally, as an embodiment, in the case where the counter DAI of the PDSCH corresponding to the Nth PDCCH monitoring opportunity in the HARQ-ACK feedback window is M and N<M, when the terminal device determines the HARQ-ACK codebook, the HARQ-ACK corresponding to the PDSCH corresponding to the Nth PDCCH monitoring opportunity is the Mth group of HARQ-ACK feedback in the HARQ-ACK codebook. For example, as shown in FIG. 6, the HARQ-ACK feedback window includes a total of 8 slots, and each slot is configured with a PDCCH monitoring opportunity. The counter DAI of the PDSCH corresponding to the first PDCCH monitoring opportunity in the HARQ-ACK feedback window is 2, and when determining the HARQ-ACK codebook, the terminal device determines the HARQ feedback corresponding to the counter DAIs of 0 and 1 that does not occur within the HARQ-ACK feedback window as NACK. That is, in this case, the HARQ-ACK codebook determination by the terminal device is not limited by the HARQ-ACK feedback window. For another example, assuming that the size of the HARQ-ACK feedback bits corresponding to each PDSCH is K=2, the HARQ-ACK codebook determined by the terminal device for the HARQ-ACK feedback window shown in FIG. 6 is shown in Table 4 below:

**Table 4**

| Assumed Counter DAI "00" | | Assumed Counter DAI "01" | | Counter DAI "10" | | Counter DAI "11" | | | Counter DAI "00" | |
|---|---|---|---|---|---|---|---|---|---|---|
| NACK | NACK | NACK | NACK | Codeword 0 | Codeword 1 | Codeword 0 | | Codeword 1 | Codeword 0 | Codeword 1 |

| Counter DAI "01" | | Counter DAI "10" | | | | | | | | |
|---|---|---|---|---|---|---|---|---|---|---|
| Codeword 0 | Codeword 1 | Codeword 0 | Codeword 1 | | | | | | | |

Optionally, as another embodiment, in the case where the counter DAI of the PDSCH corresponding to the Nth PDCCH monitoring opportunity in the HARQ-ACK feedback window is M and N<M, when the terminal device determines the HARQ-ACK codebook, the HARQ-ACK corresponding to the PDSCH corresponding to the Nth PDCCH monitoring opportunity is the Nth group of HARQ-ACK feedback in the HARQ-ACK codebook. For example, as shown in FIG. 6 again, the HARQ feedback window includes a total of 8 slots, and each slot is configured with a PDCCH monitoring opportunity. The counter DAI of the PDSCH corresponding to the first PDCCH monitoring opportunity in the HARQ-ACK feedback window is 3, and when the terminal device determines the HARQ-ACK codebook, the HARQ feedback corresponding to the PDSCH whose DAI is indicated as 3 is used as the starting point. That is, in this case, when the terminal device determines the HARQ-ACK codebook, the codebook is determined according to both the HARQ-ACK feedback window and the DAI indication. For another example, assuming that the size of the HARQ-ACK feedback bits corresponding to each PDSCH is K=2, the HARQ-ACK codebook determined by the terminal device for the HARQ-ACK feedback window shown in FIG. 6 is shown in Table 5 below:

**Table 5**

| Counter DAI "10" | | Counter DAI "11" | | Counter DAI "00" | | Counter DAI "01" | | Counter DAI "10" | |
|---|---|---|---|---|---|---|---|---|---|
| Codeword 0 | Codeword 1 | Codeword 0 | Codeword 1 | Codeword 0 | Codeword 1 | Codeword 0 | Codeword 1 | Codeword 0 | Codeword 1 |

It should be noted that the foregoing embodiments are illustrated only in the examples where the HARQ-ACK codebook is a dynamic codebook in a single carrier scenario, and the foregoing embodiments are also applicable when the HARQ-ACK codebook is a dynamic codebook in a multi-carrier scenario.

Therefore, in the embodiments of the present application, when the terminal device uses the dynamic codebook for the feedback, if the PDSCH position corresponding to PDCCH monitoring opportunity in the HARQ-ACK feedback window is inconsistent with the counter DAI corresponding to the PDSCH, the starting point for the codebook determination is based on the PDSCH position, or the starting point for the codebook determination is based on the counter DAI, so that the terminal device and the network device may have the same recognition of the codebook determination.

FIG. 7 is a schematic flowchart of a method 300 for determining a HARQ-ACK codebook according to an embodiment of the present application. As shown in FIG. 7, the method 300 may include the following:

S310, sending, by a network device, a first PDSCH to a terminal device within a first time window, where the first PDSCH corresponds to first HARQ-ACK information; and

S320, determining, by the network device, a HARQ-ACK codebook corresponding to the first time window, where the HARQ-ACK codebook includes the first HARQ-ACK information.

Optionally, in some embodiments of the present application, the first PDSCH is a PDSCH corresponding to a Nth PDCCH monitoring opportunity indication within the first time window, a counter DAI corresponding to the first PDSCH is M, N and M are positive integers, and N<M.

Optionally, the network device determines an Nth group of HARQ-ACK information in the HARQ-ACK codebook as the first HARQ-ACK information, where each group of HARQ-ACK information includes a number of K HARQ-ACK bits, and K is a positive integer greater than or equal to 1.

Further, when N is a positive integer greater than or equal to 2, the terminal device determines that a first to (N-1)th groups of HARQ-ACK information in the HARQ-ACK codebook are NACK information or placeholder information.

Optionally, the network device determines an Mth group of HARQ-ACK information in the HARQ-ACK codebook as the first HARQ-ACK information, where each group of HARQ-ACK information includes a number of K HARQ-ACK bits, and K is a positive integer greater than or equal to 1.

Further, when M is a positive integer greater than or equal to 2, the terminal device determines that a first to (M-1)th groups of HARQ-ACK information in the HARQ-ACK codebook are NACK information or placeholder information.

Optionally, in some embodiments of the present application, the network device sends first indication information to the terminal device, and the first indication information is used to determine at least one of the following information:
a start position of the first time window, an end position of the first time window, a length of the first time window, a time domain position of resources for transmitting the HARQ-ACK codebook, a frequency domain position of the resources for transmitting the HARQ-ACK codebook, and a number of resources for transmitting the HARQ-ACK codebook.

Optionally, in the embodiments of the present application, the network device sends HARQ-ACK feedback timing indication information to the terminal device, where the HARQ-ACK feedback timing indication information is HARQ-ACK feedback timing indication information corresponding to a first PDSCH or a last PDSCH in the first time window, and is used to determine the time domain position of the resources for transmitting the HARQ-ACK codebook.

It should be understood that for the steps in the method 300 for determining the HARQ-ACK codebook, reference can be made to the corresponding steps in the method 200 for determining the HARQ-ACK codebook, which will not be repeated here for the sake of brevity.

Therefore, in the embodiments of the present application, when the terminal device uses the dynamic codebook for the feedback, if the PDSCH position corresponding to PDCCH monitoring opportunity indication in the feedback window is inconsistent with the counter DAI corresponding to the PDSCH, the starting point for the codebook determination is based on the PDSCH position, or the starting point for the codebook determination is based on the Counter DAI, so that the terminal device and the network device may have the same recognition of the codebook determination.

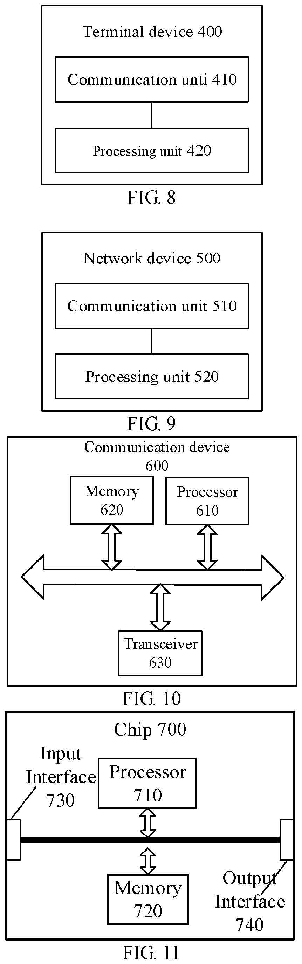

FIG. 8 is a schematic block diagram of a terminal device 400 according to an embodiment of the present application. As shown in FIG. 8, the terminal device 400 includes:
a communication unit 410 configured to receive a first PDSCH sent by a network device, where the first PDSCH is a PDSCH in a first time window and corresponds to first HARQ-ACK information; and
a processing unit 420 configured to determine a HARQ-ACK codebook corresponding to the first time window, where the HARQ-ACK codebook includes the first HARQ-ACK information.

Optionally, the first PDSCH is a PDSCH corresponding to a Nth PDCCH monitoring opportunity indication in the first time window, a counter DAI corresponding to the first PDSCH is M, N and M are positive integers, and N <M.

Optionally, the processing unit 420 is specifically configured to:
determine a Nth group of HARQ-ACK information in the HARQ-ACK codebook as the first HARQ-ACK information, where each group of HARQ-ACK information includes a number of K HARQ-ACK bits, and K is a positive integer greater than or equal to 1.

Optionally, when N is a positive integer greater than or equal to 2, the processing unit 420 is further configured to determine that a first to (N-1)th groups of HARQ-ACK information in the HARQ-ACK codebook are NACK information or placeholder information.

Optionally, the processing unit 420 is specifically configured to:
determine a Mth group of HARQ-ACK information in the HARQ-ACK codebook as the first HARQ-ACK information, where each group of HARQ-ACK information includes a number of K HARQ-ACK bits, and K is a positive integer greater than or equal to 1.

Optionally, when M is a positive integer greater than or equal to 2, the processing unit 420 is further configured to determine that a first to (M-1)th groups of HARQ-ACK information in the HARQ-ACK codebook are NACK information or placeholder information.

Optionally, the communication unit 410 is further configured to receive first indication information sent by the network device, where the first indication information is used to determine at least one of the following information:
a start position of the first time window, an end position of the first time window, a length of the first time window, a time domain position of resources for transmitting the HARQ-ACK codebook, a frequency domain position of the resources for transmitting the HARQ-ACK codebook, and a number of the resources for transmitting the HARQ-ACK codebook.

Optionally, the processing unit 420 is further configured to determine the first time window according to the first indication information.

Optionally, the processing unit 420 is further configured to determine the time domain position of the resources for transmitting the HARQ-ACK codebook according to the first indication information.

Optionally, the processing unit 420 is specifically configured to:
determine the time domain position of the resources for transmitting the HARQ-ACK codebook according to HARQ-ACK feedback timing indication information and the first indication information, where the HARQ-ACK feedback time indication information is HARQ-ACK feedback timing indication information corresponding to a first PDSCH or a last PDSCH within the first time window.

It should be understood that the terminal device 400 according to the embodiments of the present application can correspond to the terminal device in the method embodiments of the present application, and the above-mentioned and other operations and/or functions of the units in the terminal device 400 are used to implement the process for the terminal device in method 200 as shown in FIG. 5, which will not be repeated here for the sake of brevity.

FIG. 9 is a schematic block diagram of a network device 500 according to an embodiment of the present application. As shown in FIG. 9, the network device 500 includes:
a communication unit 510 configured to send a first PDSCH to a terminal device within a first time window, where the first PDSCH corresponds to first HARQ-ACK information; and
a processing unit 520 configured to determine a HARQ-ACK codebook corresponding to the first time window, where the HARQ-ACK codebook includes the first HARQ-ACK information.

Optionally, the first PDSCH is a PDSCH corresponding to a Nth PDCCH monitoring opportunity indication in the first time window, a counter DAI corresponding to the first PDSCH is M, N and M are positive integers, and N <M.

Optionally, the processing unit 520 is specifically configured to:
determine a Nth group of HARQ-ACK information in the HARQ-ACK codebook as the first HARQ-ACK information, where each group of HARQ-ACK information includes a number of K HARQ-ACK bits, and K is a positive integer greater than or equal to 1.

Optionally, when N is a positive integer greater than or equal to 2, the processing unit 420 is further configured to determine that a first to (N-1)th groups of HARQ-ACK information in the HARQ-ACK codebook are NACK information or placeholder information.

Optionally, the processing unit 520 is specifically configured to:
determine a Mth group of HARQ-ACK information in the HARQ-ACK codebook as the first HARQ-ACK information, where each group of HARQ-ACK information includes a number of K HARQ-ACK bits, and K is a positive integer greater than or equal to 1.

Optionally, when M is a positive integer greater than or equal to 2, the processing unit 420 is further configured to determine that a first to (M-1)th groups of HARQ-ACK information in the HARQ-ACK codebook are NACK information or placeholder information.

Optionally, the communication unit 510 is further configured to send first indication information to the terminal device, where the first indication information is used to determine at least one of the following information:
a start position of the first time window, an end position of the first time window, a length of the first time window, a time domain position of resources for transmitting the HARQ-ACK codebook, a frequency domain position of the resources for transmitting the HARQ-ACK codebook, and a number of the resources for transmitting the HARQ-ACK codebook.

Optionally, the communication unit 510 is further configured to send HARQ-ACK feedback timing indication information to the terminal device, where the HARQ-ACK feedback timing indication information is HARQ-ACK feedback timing indication information corresponding to a first PDSCH or a last PDSCH in the first time window and is used to determine the time domain position of the resources for transmitting the HARQ-ACK codebook.

It should be understood that the network device 500 according to the embodiments of the present application can correspond to the network device in the method embodiments of the present application, and the above-mentioned and other operations and/or functions of the units in the network device 500 are used to implement the corresponding process of the network device in the method 300 of FIG. 7, which will not be repeated here for the sake of brevity.

FIG. 10 is a schematic structural diagram of a communication device 600 according to an embodiment of the present application. The communication device 600 shown in FIG. 10 includes a processor 610. The processor 610 can call and execute a computer program from a memory to carry out the methods in the embodiments of the present application.

Optionally, as shown in FIG. 10, the communication device 600 can further include a memory 620. The processor 610 can invoke and run the computer program from the memory 620 to carry out the methods in the embodiments of the present application.

The memory 620 can be a separate device independent of the processor 610, or can be integrated in the processor 610.

Optionally, as shown in FIG. 10, the communication device can further include a transceiver 630, and the processor 610 can control the transceiver 630 to communicate with other devices, and specifically to transmit information or data to other devices, or to receive information or data transmitted from other devices.

The transceiver 630 can include a transmitter and a receiver. The transceiver 630 can further include one or more antennas.

Optionally, the communication device 600 can specifically be the network device in the embodiments of the present application, and the communication device 600 can carry out the corresponding processes which are implemented by the network device in the methods of the embodiments of the present application, which will not be repeated here for the sake of brevity.

Optionally, the communication device 600 can specifically be the mobile terminal/terminal device in the embodiments of the application, and the communication device 600 can implement the corresponding processes which are implemented by the mobile terminal/terminal device in the methods according to the embodiments of the present application, which will not be repeated here for the sake of brevity.

FIG. 11 is a schematic structural diagram of a chip according to an embodiment of the present application. The chip 700 shown in FIG. 11 includes a processor 710 which can invoke and run a computer program from a memory to implement the methods in the embodiments of the present application.

Optionally, as shown in FIG. 11, the chip 700 can further include a memory 720. The processor 710 can invoke and run the computer program from the memory 720 to carry out the methods in the embodiments of the present application.

The memory 720 can be a separate device independent of the processor 710, or can be integrated in the processor 710.

Optionally, the chip 700 can further include an input interface 730. The processor 710 can control the input interface 730 to communicate with other devices or chips, and particularly to obtain information or data transmitted by other devices or chips.

Optionally, the chip 700 can further include an output interface 740. The processor 710 can control the output interface 740 to communicate with other devices or chips, and particularly to output information or data to other devices or chips.

Optionally, the chip can be applied to the network device in the embodiments of the present application, and the chip can carry out the corresponding processes which are implemented by the network device in the methods of the embodiments of the present application, which will not be repeated here for the sake of brevity.

Optionally, the chip can be applied to the mobile terminal/terminal device in the embodiments of the present application, and the chip can implement the corresponding processed which are implemented by the mobile terminal/terminal device in the methods of the embodiments of the present application, which will not be repeated here for the sake of brevity.

It should be understood that the chip mentioned in the embodiments of the present application can also be referred to as a system-level chip, a system chip, a chip system, or a system-on-chip.

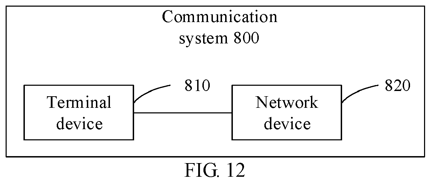

FIG 12 is a schematic block diagram of a communication system 800 according to an embodiment of the present application. As shown in FIG. 12, the communication system 800 includes a terminal device 810 and a network device 820.

The terminal device 810 can be used to implement the corresponding functions implemented by the terminal device in the above methods, and the network device 820 can be used to implement the corresponding functions implemented by the network device in the above methods, which will not be repeated here for the sake of brevity.

It should be understood that the processor according to the embodiments of the present application can be an integrated circuit chip with signal processing capability. In the implementations, the steps of the foregoing method embodiments can be performed by an integrated logic circuit of hardware in the processor or by instructions in a form of software. The foregoing processor can be a general-purpose processor, a Digital Signal Processor (DSP), an Application Specific Integrated Circuit (ASIC), a Field Programmable Gate Array (FPGA), another programmable logic device, discrete gate or transistor logic device, or a discrete hardware component, which can implement the methods, steps, and logical blocks disclosed in the embodiments of the present disclosure. The general-purpose processor can be a microprocessor, any conventional processor or the like. The steps of the methods disclosed in connection with the embodiments of the present disclosure can be directly embodied in and performed by a hardware decoding processor, or can be implemented by a combination of hardware and software modules in the decoding processor. The software modules can be located in a mature storage medium in the art such as a random access memory, a flash memory, a read-only memory, a programmable read-only memory, an electrically erasable programmable memory or a register. The storage medium is located in the memory, and the processor reads information in the memory and implements the steps of the above methods in combination with the hardware thereof.

It can be understood that the memory in the embodiments of the present application may be a volatile memory or a non-volatile memory, or may include both the volatile and non-volatile memories. In an embodiment, the non-volatile memory can be a Read-Only Memory (ROM), a Programmable ROM (PROM), an erasable PROM (EPROM), an electrically EPROM (EEPROM) or a flash memory. The volatile memory may be a Random Access Memory (RAM), which is used as an external cache. By way of exemplary but not restrictive description, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) ) and a Direct Rambus RAM (DR RAM). It should be noted that the memories of the systems and methods described herein are intended to include, but are not limited to, these and any other suitable types of memories.

It should be understood that the foregoing description of the memory is exemplary rather than limiting. For example, the memory in the embodiments of the present disclosure can also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch-Link DRAM (SLDRAM), a Direct Rambus RAM (DR RAM), among others. That is to say, the memory in the embodiments of the present disclosure is intended to include but is not limited to those and any other suitable types of memories.

The embodiments of the present disclosure also provide a computer-readable storage medium for storing a computer program.

Optionally, the computer-readable storage medium can be applied to the network device in the embodiments of the present application, and the computer program causes a computer to perform the corresponding processes which are implemented by the network device in the methods of the embodiments of the present application, which will not be repeated here for the sake of brevity.

Optionally, the computer-readable storage medium can be applied to the mobile terminal/terminal device in the embodiments of the present application, and the computer program causes a computer to perform the corresponding processes which are implemented by the mobile terminal/terminal device in the methods of the embodiments of the present application, which will not be repeated here for the sake of brevity.

The embodiments of the present application also provide a computer program product including computer program instructions.

Optionally, the computer program product can be applied to the network device in the embodiments of the present application, and the computer program instructions cause a computer to perform the corresponding processes implemented by the network device in the methods of the embodiments of the present application, which will not be repeated here for the sake of brevity.

Optionally, the computer program product can be applied to the mobile terminal/terminal device in the embodiments of the present application, and the computer program instructions cause a computer to perform the corresponding processes which are implemented by the mobile terminal/terminal device in the methods of the embodiments of the present application, which will not be repeated here for the sake of brevity.

The embodiments of the application also provide a computer program.

Optionally, the computer program can be applied to the network device in the embodiments of the present application, and when running on a computer, the computer program causes the computer to perform the corresponding process implemented by the network device in the methods of the embodiments of the present application, which will not be repeated here for the sake of brevity.

Optionally, the computer program can be applied to the mobile terminal/terminal device in the embodiments of the present application, and when running on a computer, the computer program causes the computer to perform the corresponding processes implemented by the mobile terminal/terminal device in the methods of the embodiments of the present application, which will not be repeated here for the sake of brevity.

Those of ordinary skill in the art can recognize that the exemplary units and algorithm steps described in connection with the embodiments disclosed herein can be implemented in electronic hardware or a combination of computer software and the electronic hardware. Whether these functions are implemented in hardware or in software depends on the specific applications of the technical solutions and design constraints. Various methods can be used by professional technicians to implement the described functions for each specific application, and such implementations should not be considered as going beyond the scope of the present disclosure.

Those skilled in the art can clearly understand that for the convenience and conciseness of the description, for the specific operating process of the systems, devices and units described above, reference can be made to corresponding process in the foregoing method embodiments, which will not be repeated here.

It should be understood that the systems, devices, and methods disclosed in several embodiments of the present disclosure can be implemented in other manners. For example, the device embodiments described above are merely illustrative. For example, the division of the units is only a logical function division, and in actual implementations, there can be other division manners. For example, a plurality of units or components can be combined or integrated into another system, or some features can be ignored or not implemented. In addition, the coupling or direct coupling or communication connection shown or discussed herein can also be indirect coupling or communication connection through some interfaces, devices or units, and can be in electrical, mechanical or other forms.

The units described as separate components may be or may not be physically separated, and the components shown as units may be or may not be physical units, that is, they may be located in one place or may be distributed on multiple network units. Some or all of the units can be selected to achieve the objectives of the solutions of the embodiments according to actual requirements.

In addition, the functional units in the embodiments of the present disclosure can be integrated into one processing unit, or each unit can individually exist physically, or two or more of the units can be integrated into one unit.

If implemented in the form of software functional units and sold or used as an independent product, the functions can be stored in a computer-readable storage medium. Based on such understanding, the technical solution of the present disclosure essentially, a part thereof that contributes to the prior art, or a part of the technical solution can be embodied in the form of a software product, and the computer software product is stored in a storage medium and includes instructions which enable a computer device (which may be a personal computer, a server, a network device or the like) to perform all or part of the steps of the methods described in the embodiments of the present disclosure. The foregoing storage medium includes various medium such as a USB drive, a removable hard disk, a ROM, a RAM, a magnetic disk or an optical disc that can store program codes.

Those described above are only specific implementations of the present disclosure, and the protection scope of the present disclosure is not limited thereto. Any alteration or replacement readily devised by a person skilled in the art within the technical scope disclosed in the present disclosure shall fall within the scope of the present disclosure. Therefore, the protection scope of the present disclosure shall be subject to the protection scope of the claims.

## Claims

1. A method for determining a HARQ-ACK codebook, comprising:
receiving, by a terminal device, a first Physical Downlink Shared Channel (PDSCH) sent by a network device, wherein the first PDSCH is a PDSCH in a first time window and corresponds to first Hybrid Automatic Repeat request Acknowledgement (HARQ-ACK) information; and
determining, by the terminal device, a HARQ-ACK codebook corresponding to the first time window, wherein the HARQ-ACK codebook comprises the first HARQ-ACK information.

2. The method according to claim 1, wherein the first PDSCH is a PDSCH corresponding to a Nth Physical Downlink Control Channel (PDCCH) monitoring opportunity indication in the first time window, a counter Downlink Assignment Indication (DAI) corresponding to the first PDSCH is M, N and M are positive integers, and N<M.

3. The method according to claim 2, wherein the determining, by the terminal device, the HARQ-ACK codebook corresponding to the first time window comprises:
determining, by the terminal device, a Nth group of HARQ-ACK information in the HARQ-ACK codebook as the first HARQ-ACK information, wherein each group of HARQ-ACK information comprises a number of K HARQ-ACK bits, and K is a positive integer greater than or equal to 1.

4. The method according to claim 3, further comprising:
determining, by the terminal device, that a first to (N-1)th groups of HARQ-ACK information in the HARQ-ACK codebook are negative acknowledgement (NACK) information or placeholder information when N is a positive integer greater than or equal to 2.

5. The method according to claim 2, wherein the determining, by the terminal device, the HARQ-ACK codebook corresponding to the first time window comprises:
determining, by the terminal device, a Mth group of HARQ-ACK information in the HARQ-ACK codebook as the first HARQ-ACK information, wherein each group of HARQ-ACK information comprises a number of K HARQ-ACK bits, and K is a positive integer greater than or equal to 1.

6. The method according to claim 5, further comprising:
determining, by the terminal device, that a first to (M-1)th groups of HARQ-ACK information in the HARQ-ACK codebook are NACK information or placeholder information when M is a positive integer greater than or equal to 2.

7. The method according to any one of claims 1 to 6, further comprising:
receiving, by the terminal device, first indication information sent by the network device, wherein the first indication information is used to determine at least one of the following information:
a start position of the first time window, an end position of the first time window, a length of the first time window, a time domain position of resources for transmitting the HARQ-ACK codebook, a frequency domain position of the resources for transmitting the HARQ-ACK codebook, and a number of the resources for transmitting the HARQ-ACK codebook.

8. The method according to claim 7, further comprising:
determining the first time window by the terminal device according to the first indication information.

9. The method according to claim 7 or 8, further comprising:
determining, by the terminal device according to the first indication information, the time domain position of the resources for transmitting the HARQ-ACK codebook.

10. The method according to claim 9, wherein the determining, by the terminal device according to the first indication information, the time domain position of the resources for transmitting the HARQ-ACK codebook comprises:
determining the time domain position of the resources for transmitting the HARQ-ACK codebook by the terminal device according to HARQ-ACK feedback timing indication information and the first indication information, wherein the HARQ-ACK feedback timing indication information is HARQ-ACK feedback timing indication information corresponding to a first PDSCH or a last PDSCH within the first time window.

11. A method for determining a HARQ-ACK codebook, comprising:
sending, by a network device, a first Physical Downlink Shared Channel (PDSCH) to a terminal device within a first time window, wherein the first PDSCH corresponds to first Hybrid Automatic Repeat request Acknowledgement (HARQ-ACK) information; and
determining, by the network device, a HARQ-ACK codebook corresponding to the first time window, wherein the HARQ-ACK codebook comprises the first HARQ-ACK information.

12. The method according to claim 11, wherein the first PDSCH is a PDSCH corresponding to a Nth Physical Downlink Control Channel (PDCCH) monitoring opportunity indication in the first time window, a counter Downlink Assignment Indication (DAI) corresponding to the first PDSCH is M, N and M are positive integers, and N<M.

13. The method according to claim 12, wherein the determining, by the network device, the HARQ-ACK codebook corresponding to the first time window comprises:
determining, by the network device, a Nth group of HARQ-ACK information in the HARQ-ACK codebook as the first HARQ-ACK information, wherein each group of HARQ-ACK information includes a number of K HARQ-ACK bits, and K is a positive integer greater than or equal to 1.

14. The method according to claim 13, further comprising:
determining, by the network device, that a first to (N-1)th groups of HARQ-ACK information in the HARQ-ACK codebook are negative acknowledgement (NACK) information or placeholder information when N is a positive integer greater than or equal to 2.

15. The method according to claim 12, wherein the determining, by the network device, the HARQ-ACK codebook corresponding to the first time window comprises:
determining, by the network device, a Mth group of HARQ-ACK information in the HARQ-ACK codebook as the first HARQ-ACK information, wherein each group of HARQ-ACK information includes a number of K HARQ-ACK bits, and K is a positive integer greater than or equal to 1.

16. The method according to claim 15, further comprising:
determining, by the network device, that a first to (M-1)th groups of HARQ-ACK information in the HARQ-ACK codebook are NACK information or placeholder information when M is a positive integer greater than or equal to 2.

17. The method according to any one of claims 11 to 16, further comprising:
sending, by the network device, first indication information to the terminal device, wherein the first indication information is used to determine at least one of the following information:
a start position of the first time window, an end position of the first time window, a length of the first time window, a time domain position of resources for transmitting the HARQ-ACK codebook, a frequency domain position of the resources for transmitting the HARQ-ACK codebook, and a number of the resources for transmitting the HARQ-ACK codebook.

18. The method according to claim 17, further comprising:
sending, by the network device, HARQ-ACK feedback timing indication information to the terminal device, wherein the HARQ-ACK feedback timing indication information is HARQ-ACK feedback timing indication information corresponding to a first PDSCH or a last PDSCH in the first time window and is used to determine the time domain position of the resources for transmitting the HARQ-ACK codebook.

19. A terminal device, comprising:
a communication unit configured to receive a first Physical Downlink Shared Channel (PDSCH) sent by a network device, wherein the first PDSCH is a PDSCH in a first time window and corresponds to first Hybrid Automatic Repeat request Acknowledgement (HARQ-ACK) information; and
a processing unit configured to determine a HARQ-ACK codebook corresponding to the first time window, wherein the HARQ-ACK codebook comprises the first HARQ-ACK information.

20. The terminal device according to claim 19, wherein the first PDSCH is a PDSCH corresponding to a Nth Physical Downlink Control Channel (PDCCH) monitoring opportunity indication in the first time window, a counter Downlink Assignment Indication (DAI) corresponding to the first PDSCH is M, N and M are positive integers, and N<M.

21. The terminal device according to claim 20, wherein the processing unit is specifically configured to:
determine a Nth group of HARQ-ACK information in the HARQ-ACK codebook as the first HARQ-ACK information, wherein each group of HARQ-ACK information comprises a number of K HARQ-ACK bits, and K is a positive integer greater than or equal to 1.

22. The terminal device according to claim 21, wherein the processing unit is further configured to determine that a first to (N-1)th groups of HARQ-ACK information in the HARQ-ACK codebook are negative acknowledgement (NACK) information or placeholder information when N is a positive integer greater than or equal to 2.

23. The terminal device according to claim 20, wherein the processing unit is specifically configured to:
determine a Mth group of HARQ-ACK information in the HARQ-ACK codebook as the first HARQ-ACK information, wherein each group of HARQ-ACK information comprises a number of K HARQ-ACK bits, and K is a positive integer greater than or equal to 1.

24. The terminal device according to claim 23, wherein the processing unit is further configured to determine that a first to (M-1)th groups of HARQ-ACK information in the HARQ-ACK codebook are NACK information or placeholder information when M is a positive integer greater than or equal to 2.

25. The terminal device according to any one of claims 19 to 24, wherein the communication unit is further configured to receive first indication information sent by the network device, and the first indication information is used to determine at least one of the following information:
a start position of the first time window, an end position of the first time window, a length of the first time window, a time domain position of resources for transmitting the HARQ-ACK codebook, a frequency domain position of the resources for transmitting the HARQ-ACK codebook, and a number of the resources for transmitting the HARQ-ACK codebook.

26. The terminal device according to claim 25, wherein the processing unit is further configured to determine the first time window according to the first indication information.

27. The terminal device according to claim 25 or 26, wherein the processing unit is further configured to determine the time domain position of the resources for transmitting the HARQ-ACK codebook according to the first indication information.

28. The terminal device according to claim 27, wherein the processing unit is specifically configured to:
determine the time domain position of the resources for transmitting the HARQ-ACK codebook according to HARQ-ACK feedback timing indication information and the first indication information, wherein the HARQ-ACK feedback timing indication information is HARQ-ACK feedback timing indication information corresponding to a first PDSCH or a last PDSCH within the first time window.

29. A network device, comprising:
a communication unit configured to send a first Physical Downlink Shared Channel (PDSCH) to a terminal device within a first time window, wherein the first PDSCH corresponds to first Hybrid Automatic Repeat request Acknowledgement (HARQ-ACK) information; and
a processing unit configured to determine a HARQ-ACK codebook corresponding to the first time window, wherein the HARQ-ACK codebook comprises the first HARQ-ACK information.

30. The network device according to claim 29, wherein the first PDSCH is a PDSCH corresponding to a Nth Physical Downlink Control Channel (PDCCH) monitoring opportunity indication in the first time window, a counter Downlink Assignment Indication (DAI) corresponding to the first PDSCH is M, N and M are positive integers, and N<M.

31. The network device according to claim 30, wherein the processing unit is specifically configured to:
determine a Nth group of HARQ-ACK information in the HARQ-ACK codebook as the first HARQ-ACK information, wherein each group of HARQ-ACK information comprises a number of K HARQ-ACK bits, and K is a positive integer greater than or equal to 1.

32. The network device according to claim 31, wherein the processing unit is further configured to determine that a first to (N-1)th groups of HARQ-ACK information in the HARQ-ACK codebook are negative acknowledgement (NACK) information or placeholder information when N is a positive integer greater than or equal to 2.

33. The network device according to claim 30, wherein the processing unit is specifically configured to:
determine a Mth group of HARQ-ACK information in the HARQ-ACK codebook as the first HARQ-ACK information, wherein each group of HARQ-ACK information comprises a number of K HARQ-ACK bits, and K is a positive integer greater than or equal to 1.

34. The network device according to claim 33, wherein the processing unit is further configured to determine that a first to (M-1)th groups of HARQ-ACK information in the HARQ-ACK codebook are NACK information or placeholder information when M is a positive integer greater than or equal to 2.

35. The network device according to any one of claims 29 to 34, wherein the communication unit is further configured to send first instruction information to the terminal device, and the first instruction information is used to determine at least one of the following information:
a start position of the first time window, an end position of the first time window, a length of the first time window, a time domain position of resources for transmitting the HARQ-ACK codebook, a frequency domain position of the resources for transmitting the HARQ-ACK codebook, and a number of the resources for transmitting the HARQ-ACK codebook.

36. The network device according to claim 35, wherein the communication unit is further configured to send HARQ-ACK feedback timing indication information to the terminal device, wherein the HARQ-ACK feedback timing indication information is HARQ-ACK feedback timing indication information corresponding to a first PDSCH or a last PDSCH in the first time window and is used to determine the time domain position of the resources for transmitting the HARQ-ACK codebook.

37. A terminal device comprising a processor and a memory for storing a computer program, wherein the processor is configured to call and run the computer program stored in the memory to perform the method according to any one of claims 1 to 10.

38. A network device comprising a processor and a memory for storing a computer program, wherein the processor is configured to call and run the computer program stored in the memory to perform the method according to any one of claims 11 to 18.

39. A chip comprising a processor configured to call and run a computer program from a memory to cause a device installed with the chip to perform the method according to any one of claims 1 to 10.

40. A chip comprising a processor configured to call and run a computer program from a memory to cause a device installed with the chip to perform the method according to any one of claims 11 to 18.

41. A computer-readable storage medium for storing a computer program that causes a computer to perform the method according to any one of claims 1 to 10.

42. A computer-readable storage medium for storing a computer program that causes a computer to perform the method according to any one of claims 11 to 18.

43. A computer program product comprising computer program instructions that cause a computer to perform the method according to any one of claims 1 to 10.

44. A computer program product comprising computer program instructions that cause a computer to perform the method according to any one of claims 11 to 18.

45. A computer program that causes a computer to perform the method according to any one of claims 1 to 10.

46. A computer program that causes a computer to perform the method according to any one of claims 11 to 18.
